(19) Europäisches Patentamt
European Patent Office
Office européen des brevets

(11) Veröffentlichungsnummer: **0 046 219**
**A1**

(12) # EUROPÄISCHE PATENTANMELDUNG

(21) Anmeldenummer: **81105950.0**

(22) Anmeldetag: **28.07.81**

(51) Int. Cl.³: **H 01 G 9/02**

(30) Priorität: **14.08.80 DE 3030800**

(43) Veröffentlichungstag der Anmeldung: **24.02.82 Patentblatt 82/8**

(84) Benannte Vertragsstaaten: **DE FR GB IT SE**

(71) Anmelder: **SIEMENS AKTIENGESELLSCHAFT Berlin und München, Postfach 22 02 61, D-8000 München 22 (DE)**

(72) Erfinder: **Lauer, Wilhelm, Dr. Dipl.-Chem, Feldiesweg 8, D-7928 Giengen 6 (DE)**
Erfinder: **Soldner, Rudolf, Dr. Dipl.-Chem, 21 Jalan Kebaya, 1027 Singapore (SG)**

(54) **Elektrolytkondensator.**

(57) Die Erfindung betrifft einen Elektrolytkondensator (1) welcher durch Aufwickeln von Elektrodenfolien (2, 3) mit Abstandshaltern (4, 5) hergestellt ist. An den Elektrodenfolien (2, 3) sind Stromzuführungen (6, 7) angeordnet. Die Abstandshalter (4, 5) sind mit einem sauren, wasserhaltigen Betriebselektrolyt auf Glykol-Borat-Basis und einem Zusatz bis zu 2 Gew.-% 4-Nitrophenol getränkt. Die Erfindung eignet sich zur Anwendung bei Elektrolytkondensatoren mit wasserhaltigen Betriebselektrolyten.

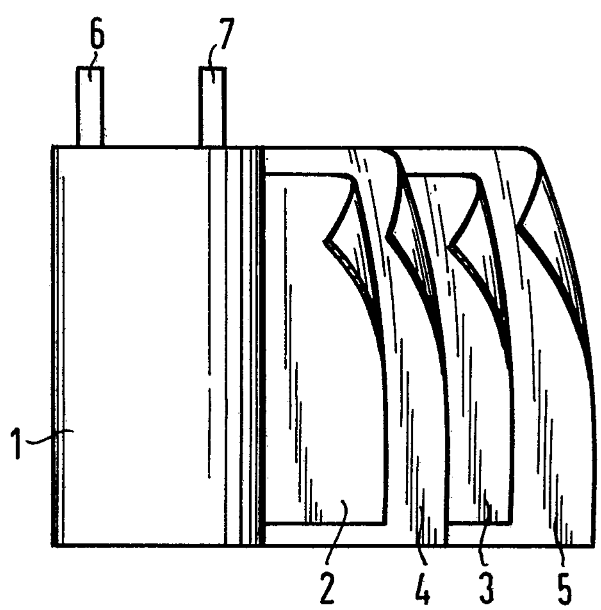


EP 0 046 219 A1

SIEMENS AKTIENGESELLSCHAFT
Berlin und München

Unser Zeichen
VPA
80 P 1129 E

## Elektrolytkondensator

Die Erfindung betrifft einen Elektrolytkondensator, bestehend aus aufgewickelten Lagen einer, gegebenenfalls aufgerauhten, formierten Anodenfolie, einer Kathodenfolie und Abstandshaltern, die mit einem sauren, wasserhaltigen Betriebselektrolyt auf Glykol-Borat-Basis getränkt sind.

Das Material, aus dem die Anoden- und Kathodenfolie besteht, ist ein sogenanntes Ventilmetall, d.h. ein Metall, welches ein Oxid bildet, das den Strom nur in einer Richtung sperrt, in der anderen dagegen durchläßt. Im allgemeinen wird bei Elektrolytkondensatoren mit "nassen" Betriebselektrolyt Aluminium als Elektrodenmaterial verwendet. Es sind aber auch andere Ventilmetalle, wie z.B. Tantal, Zirkon, Niob, Titan für die Herstellung derartiger Kondensatoren bekannt.

Das Wasser, das der Betriebselektrolyt enthält, kann auf zweierlei Arten in diesen gelangen. Erstens kann es bei der Herstellung zugesetzt werden, es kann aber auch sogenanntes Veresterungswasser sein, das sich bei der Herstellung des Elektrolyts in diesem durch die Veresterung von z.B. Äthylenglykol und Borsäure bildet.

In den letzten Jahren ist die Nachfrage nach verkleinerten Bauelementen ständig gestiegen. Dies kann bei Elektrolytkondensatoren beispielsweise durch die Ver-

Sac 1 Pj
13.08.1980

größerung der Kapazität pro Volumeneinheit erreicht werden, indem höher aufgerauhte Anodenfolien verwendet werden. Die höheren Aufrauhgrade ziehen allerdings zwangsläufig eine Erhöhung des Verlustfaktors nach sich. Diese Erhöhung des Verlustfaktors kann andererseits durch Verwendung von höher leitfähigen Betriebselektrolyten kompensiert werden, da die ohmschen Anteile des Scheinwiderstandes durch eine hohe elektrolytische Leitfähigkeit verringert werden. Daneben ist es auch erwünscht, die Temperaturabhängigkeit des Betriebselektrolyts zu vermindern, da dadurch auch bei niedrigen Temperaturen der Verlustfaktor und die anderen elektrischen Kenndaten, wie Kapazität und Scheinwiderstand, möglichst klein gehalten werden.

Betriebselektrolyte, welche diese Forderungen erfüllen, sind die sogenannten "Lösungsmittelelektrolyte", die aus organischen Lösungsmitteln, wie beispielsweise Methylglykol oder Dimethylformamid, und darin löslichen Salzen von bevorzugt organischen Säuren mit Aminen bestehen. Diese Elektrolyte zeigen eine erwünschte hohe Leitfähigkeit und ein besonders günstiges Tieftemperaturverhalten. Sie bedingen aber wegen ihrer Agressivität gegenüber den herkömmlichen bei Elektrolytkondensatoren verwendeten Materialien den Einsatz neuer, kostspieliger Materialien. Auch ist die Gesundheitsschädlichkeit bzw. sogar Giftigkeit derartiger Elektrolytbestandteile zu bedenken, und es müssen besondere Vorsichtsmaßnahmen bei ihrer Herstellung getroffen werden.

Es ist jedoch bekannt, daß auch mit wasserhaltigen Betriebselektrolyten auf Glykol-Borat-Basis die erforderliche hohe Leitfähigkeit und damit verbunden niedrigere

Verlustfaktoren erreichbar sind, wenn man diesen Elektrolyten gegebenenfalls zusätzlich zum bereits in ihnen enthaltenen Veresterungswasser weiteres Wasser zusetzt. Somit können auch Betriebselektrolyte auf Glykol-Borat-Basis, welche die Vorteile der unbedenklichen Verarbeitung und Ungiftigkeit aufweisen, zur Imprägnierung von Elektrolytkondensatoren herangezogen werden.

Beim Einsatz von wasserhaltigen Betriebselektrolyten, insbesondere bei solchen, denen zusätzlich zum Veresterungswasser weiteres Wasser zugesetzt ist, können jedoch eine Reihe von Schwierigkeiten auftreten. Insbesondere bei Elektrolytkondensatoren mit Elektrodenfolien aus Aluminium greift das Wasser die anodisch erzeugte Oxidschicht an (Hydratation) und verschlechtert deren dielektrische Wirksamkeit. Dies läßt sich jedoch in bekannter Weise, z.B. durch Phosphatzusätze, beheben. Weiterhin findet während des Betriebes des Elektrolytkondensators an Spannung eine elektrolytische Zersetzung des Wasseranteils statt: infolge des - wenn auch geringen - Reststroms werden gasförmiger Wasserstoff und Sauerstoff gebildet. Während der Sauerstoff durch Oxidation z.B. der Anodenfolie gebunden wird, bewirkt der Wasserstoff im verschlossenen Kondensator einen Überdruck. Zu dieser elektrolytisch erzeugten Gasmenge kann bei der Verwendung von z.B. Aluminiumfolien eine nicht unbeträchtliche Menge weiteren Wasserstoffes hinzukommen. Diese entsteht durch die chemische Reaktion des Kathodenmaterials mit dem Wasseranteil des Elektrolyts nach der Reaktion:

$$2\ Al + 6\ H_2O \longrightarrow 2\ Al\ (OH)_3 + 3\ H_2.$$

Der erzeugte Gasdruck kann unter ungünstigen Umständen, insbesondere bei Elektrolytkondensatoren mit hohen Füllfaktoren bzw. geringem Leervolumen, das Gehäuse zerstören bzw. das Bersten der Sollbruchstellen bewirken, was einem Totalausfall des Bauelements gleichkommt.

Aus dem Stand der Technik sind eine Reihe von Zusätzen bekannt, welche den sich elektrolytisch entwickelnden Wasserstoff entfernen sollen.

So ist es beispielsweise aus der DE-AS 12 67 347 bekannt, einen Betriebselektrolyt mit einem nichtmetallischen Kation aus einer quaternären Ammonium-, quaternären Phosphonium-, Sulfonium- oder Arsoniumverbindung zu verwenden, der wenigstens eine reduzierbare Nitro-, Chinon-, Carbonyl-, Nitroso-, Azoxy-, Azo- oder Nitrilgruppe aufweist. Diese reduzierbaren Gruppen sollen dazu dienen, den sich elektrolytisch entwickelnden Wasserstoff zu entfernen.

Weiterhin ist es bekannt, dem Betriebselektrolyt reduzierbare Verbindungen zuzusetzen (GB-PS 979 024; GB-PS 1 058 252; US-PS 3 331 002). Dort sind organische Verbindungen aufgeführt, die eine oder mehrere Oximgruppen, z.B. Chinondioxim, besitzen. Weiterhin sind organische Verbindungen mit Nitro-, Azo- oder Chinongruppen bzw. anorganische Verbindungen, wie Eisen (III) -Chlorid und Kaliumpermanganat, genannt. Nähere Angaben über Zusatzmengen, Art der verwandten Betriebselektrolyte und Auswirkungen der Zusätze auf die Betriebselektrolyte sind dem genannten Stand der Technik nicht zu entnehmen.

Weiterhin ist es aus der DE-PS 26 42 445 bekannt, einem wasserhaltigen Betriebselektrolyt auf Glykol-Borat-Basis

bis zu 1,0 Gew.% 1,4-Benzochinon zuzusetzen. Damit wird zwar der sich entwickelnde Wasserstoff reduziert, jedoch ist das 1,4-Benzochinon im verwandten Glykol-Borat-Betriebselektrolyt nur bedingt löslich, wodurch im Elektrolytkondensator an ungünstigen Stellen doch wieder eine Wasserstoffentwicklung ohne Eliminierung stattfinden kann.

Aufgabe der Erfindung ist es daher, einen Elektrolytkondensator anzugeben, bei welchem die weiter oben angeführten Schwierigkeiten umgangen werden und bei dem insbesondere der elektrolytisch und chemisch erzeugte Wasserstoff in befriedigender Weise eliminiert wird.

Diese Aufgabe wird bei dem eingangs angegebenen Elektrolytkondensator erfindungsgemäß dadurch gelöst, daß der Elektrolyt 4-Nitrophenol enthält.

Zweckmäßigerweise enthält der Elektrolyt ca. 2 Gew.% 4-Nitrophenol.

Es ist zwar aus der DE-AS 20 18 540 ein Elektrolyt für Elektrolytkondensatoren bekannt, welcher ein Salz eines sauren Nitrobenzolderivats, ein organisches Lösungsmittel und Wasser enthält, jedoch liegt dort das p-Nitrophenol nicht in freier Form, sondern in dissoziierter Form als p-Nitrophenolat-Anion mit einem Ammonium-, Triäthylammonium-, Calcium- oder Barium-Kation vor. Auch weist der bekannte Elektrolyt nur einen geringen Wassergehalt von 0,05 bis 5 Gew.% auf. Durch das Vorliegen des p-Nitrophenols in Form eines Salzes ist es wenig geeignet, sich entwickelnden Wasserstoff zu eliminieren. Es dient vielmehr dazu, die Metalloberflächen anodisch zu oxidieren.

Dagegen liegt beim erfindungsgemäßen Elektrolytkondensator ein saurer Betriebselektrolyt auf Glykol-Borat-Basis vor, in welchem sich keine Salze des p-Nitrophenols bilden können. Weiterhin kann der erfindungsgemäße Elektrolytkondensator auch wesentlich höhere Wassermengen, beispielsweise einen Zusatz bis zu 8 Mol Wasser/Kg Elektrolyt bei einem Niedervolt-Elektrolytkondensator gemäß der DE-PS 16 14 596 bzw. von beispielsweise 4 bis 6 Mol Wasser/Kg Elektrolyt bei einem Hochvolt-Elektrolytkondensator gemäß der DE-PS 26 41 939 aufweisen. Bei derartig hohen Wassergehalten wird eine befriedigende Eliminierung des sich entwickelnden Wasserstoffes erst durch den erfindungsgemäßen Zusatz von 4-Nitrophenol erreicht.

An Hand von Ausführungsbeispielen werden die Vorteile der Erfindung näher erläutert. In der dazugehörenden Zeichnung zeigt:

Fig. 1 einen Elektrolytkondensator und

Fig. 2 die Reduzierung der erzeugten Gasmenge durch den Zusatz von 4-Nitrophenol.

In der Fig. 1 ist ein (teilweise aufgerollter-Elektrolytkondensator 1 dargestellt, der durch Aufwickeln der Elektrodenfolien 2, 3 mit Abstandshaltern 4, 5 hergestellt ist. An den Elektrodenfolien 2, 3 sind Stromzuführungen 6, 7 angeordnet. Die im betriebsfertigen Kondensator als Anode dienende Folie ist mit einer dielektrisch wirksamen Oxidschicht versehen, welche in einem Formierprozeß auf die Folie aufgebracht ist. Besonders vorteilhaft ist es, wenn die Anodenfolie vor der Formierung zur Erzielung einer höheren Kapazität pro Volumeneinheit aufgerauht ist. Der Anwendungszweck kann es erforderlich machen, daß auch die Kathodenfolie aufgerauht bzw. mit

einer Oxidschicht bedeckt ist. Die Elektrodenfolien 2, 3 bestehen aus einem Ventilmetall wie beispielsweise Aluminium, Tantal, Niob, Zirkon bzw. Titan. Die Zwischenlagen 4, 5 bestehen aus einem saugfähigem Material, wie z.B. Papier, und sind mit dem Betriebselektrolyt getränkt.

In der Fig. 2 ist dargestellt, welche Gasmenge V sich an einer locker zusammengerollten Kathodenfolie aus Aluminium mit einer Gesamtoberfläche von 0,1 $m^2$ bildet, wenn diese in ein mit dem zu untersuchenden Betriebselektrolyt der Temperatur 85 °C gefülltes Glasgefäß eingetaucht ist. Das entstehende Gas wird dabei in einer aufgesteckten Bürette aufgefangen und gemessen. Zur Aufnahme des durch das Gasvolumen verdrängten Elektrolyts dient ein (nach oben offenes) Ausgleichsgefäß. Die Kurven in der Fig. 2 zeigen den Verlauf der Wasserstoffbildung an der Kathodenfolie bei 85 °C bei einem sauren, wasserhaltigen Betriebselektrolyt auf Glykol-Borat-Basis mit einem Zusatz von 2 % 4-Nitrophenol (Kurve I) sowie eine Vergleichsmessung ohne den Zusatz von 4-Nitrophenol (Kurve II). Der Fig. 2 ist zu entnehmen, daß bei einem Zusatz von 2 Gew.% 4-Nitrophenol während einer Versuchsdauer von 200 Stunden bei 85 °C sich kein Wasserstoff mehr entwickelt.

Die wasserstoffbindende Wirkung des 4-Nitrophenols kommt durch Aufnahme von Wasserstoffatomen (Radikal $H^o$) oder Wasserstoffionen (Protonen $H^+$) und Elektronen ($e^-$) zustande. Dabei geht das 4-Nitrophenol über verschiedene Zwischenstufen (Nitroso-, Azoxy-, Azo-Verbindungen usw.) in die entsprechende Aminoverbindung über:

$$C_6H_5NO_3 \xrightarrow[-2\,H_2O]{+6H} C_6H_7NO.$$

Ausführungsbeispiel 1:

Computer-Aluminiumelektrolytkondensatoren der Nenndaten 300 mF/7,5 V wurden mit einem sauren, wasserhaltigen Betriebselektrolyt auf Glykol-Borat-Basis und einem Zusatz von 2 Gew.% 4-Nitrophenol imprägniert. Zum Vergleich wurden gleichartig aufgebaute Elektrolytkondensatoren mit einem Betriebselektrolyt ohne Zusatz von 4-Nitrophenol imprägniert. Darauf wurden die Kondensatoren einer Dauerspannungsprüfung an 7,5 V bei 85 °C unterzogen. Nach 2000 Stunden Betriebsdauer waren bei den Kondensatoren ohne 4-Nitrophenol-Zusatz alle Ventile geplatzt, während bei den erfindungsgemäßen Elektrolytkondensatoren mit 4-Nitrophenol-Zusatz auch nach 3000 Stunden Betriebsdauer noch einwandfreie Ventile vorlagen.

Ausführungsbeispiel 2:

Elektrolytkondensatoren der gleichen Nenndaten wurden einer spannungslosen Lagerung bei 85 °C für eine Zeitdauer von 500 Stunden unterzogen. In der folgenden Tabelle 1 sind die Dauerversuchsergebnisse für die Elektrolytkondensatoren mit 4-Nitrophenol-Zusatz zum Betriebselektrolyten (I) sowie die Meßwerte der Vergleichskondensatoren ohne 4-Nitrophenol-Zusatz (II) angeführt.

Tabelle 1

| Versuchszeit | I C (mF) | tan δ (%) | $I_{10'}$ (mA) | II C (mF) | tan δ (%) | $I_{10'}$ (mA) |
|---|---|---|---|---|---|---|
| 0 h | 307,6 | 57 | 0,24 | 316,0 | 66 | 0,28 |
| 168 h | 296,1 | 57 | 2,77 | 305,9 | 63 | 4,56 |
| | | | | Ventile geplatzt | | |
| 500 h | 284,3 | 57 | 2,18 | | | |

Der Tabelle ist zu entnehmen, daß auch bei spannungsloser Lagerung bereits nach 168 Stunden bei den Kondensatoren ohne 4-Nitrophenol-Zusatz die Ventile geplatzt waren. Ferner ist der Tabelle zu entnehmen, daß die erfindungsgemäßen Elektrolytkondensatoren (I) ein besseres Reststromverhalten (Reststrom I gemessen 10 Minuten nach Anlegen der Nennspannung, $I_{10}$) aufweisen.

Ausführungsbeispiele 3 und 4:

Axialbedrahtete Aluminiumelektrolytkondensatoren der Nenndaten 470 µF/25 V wurden mit einem sauren, wasserhaltigen Betriebselektrolyt auf Glykol-Borat-Basis und einem Zusatz von 2 Gew.% 4-Nitrophenol imprägniert. Zum Vergleich wurden die gleichen Kondensatoren ohne 4-Nitrophenol-Zusatz hergestellt. In der Tabelle 2 sind die Ergebnisse der Dauerspannungsprüfung an 25 V bei 85 °C sowie der spannungslosen Lagerung bei ebenfalls 85 °C dargestellt. Dabei beziehen sich die mit I bezeichneten Werte auf Elektrolytkondensatoren mit einem Betriebselektrolyt und Nitrophenol-Zusatz und die mit II bezeichneten Werte auf die Vergleichskondensatoren ohne Nitrophenol-Zusatz. In der Tabelle sind die Werte für die Kapazität C den Verlustfaktor tan $\delta$ und den Reststrom $I_{R1}$ (gemessen eine Minute nach Anlegen der Nennspannung) angeführt.

Tabelle 2

| Versuchs-bedingungen | Versuchs-dauer (h) | I: C (µF) | I: tan δ (%) | I: $I_{R1'}$ (µA) | II: C (µF) | II: tan δ (%) | II: $I_{R1'}$ (µA) |
|---|---|---|---|---|---|---|---|
| 25 V, 85 °C | 0 | 634 | 4,5 | 7,7 | 633 | 4,5 | 3,4 |
| | 500 | 597 | 5,5 | 2,0 | 629 | 6,7 | 2,0 |
| | 1000 | 577 | 5,7 | 1,8 | 607 | 6,7 | 1,9 |
| | 2000 | 554 | 5,9 | 1,7 | 573 | 7,1 | 2,0 |
| 0 V, 85 °C | 0 | 641 | 4,5 | 8 | 639 | 4,7 | 7,1 |
| | 500 | 614 | 5,2 | 158 | 616 | 7,0 | 156 |
| | 1000 | 605 | 6,2 | 339 | 607 | 7,8 | 863 |
| | 2000 | 595 | 7,3 | 394 | 591 | 8,7 | 1355 |

Der Tabelle ist zu entnehmen, daß bei der Dauerspannungsprüfung die Verlustfaktorwerte der erfindungsgemäßen Elektrolytkondensatoren (I) wesentlich stabiler sind als diejenigen der Vergleichskondensatoren (II). Bei der spannungslosen Lagerung zeigen die erfindungsgemäßen Elektrolytkondensatoren (I) ein besseres Reststromverhalten als die Vergleichskondensatoren (II).

5 Patentansprüche,
2 Figuren.

Patentansprüche

1. Elektrolytkondensator, bestehend aus aufgewickelten Lagen einer, gegebenenfalls aufgerauhten, formierten Anodenfolie, einer Kathodenfolie und Abstandshaltern, die mit einem sauren, wasserhaltigen Betriebselektrolyt auf Glykol-Borat-Basis getränkt sind, dadurch gekennzeichnet, daß der Elektrolyt 4-Nitrophenol enthält.

2. Elektrolytkondensator nach Anspruch 1, dadurch gekennzeichnet, daß der Elektrolyt ca. 2 Gew.% 4-Nitrophenol enthält.

3. Elektrolytkondensator nach Anspruch 1 oder 2, dadurch gekennzeichnet, daß die Anoden- und Kathodenfolie aus Aluminium besteht.

4. Elektrolytkondensator nach einem oder mehreren der Ansprüche 1 bis 3, dadurch gekennzeichnet, daß der Elektrolyt Phosphate und/oder Phosphorsäure enthält.

5. Elektrolytkondensator nach einem oder mehreren der Ansprüche 1 bis 4, dadurch gekennzeichnet, daß der Elektrolyt als Kationenbildner Ammoniak enthält.

FIG 1

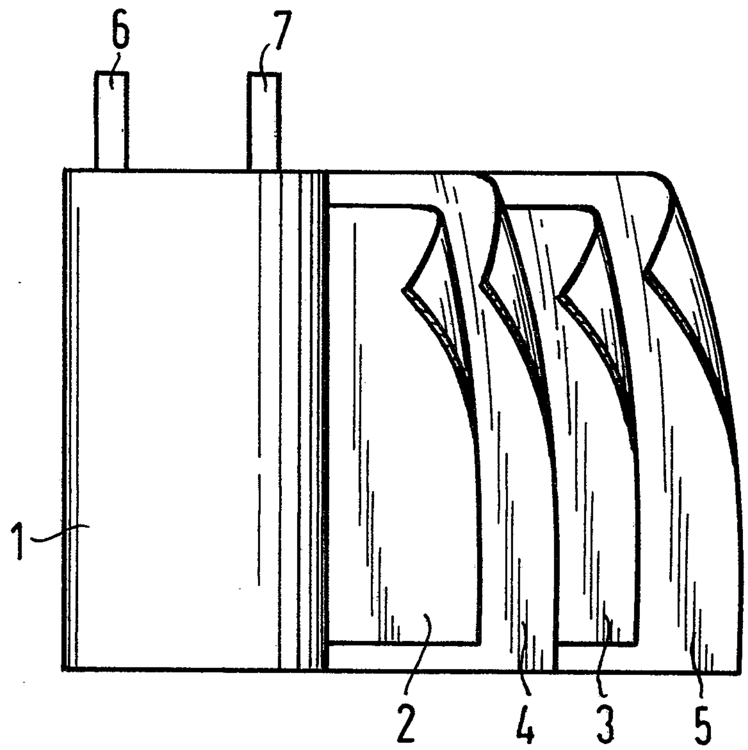

FIG 2

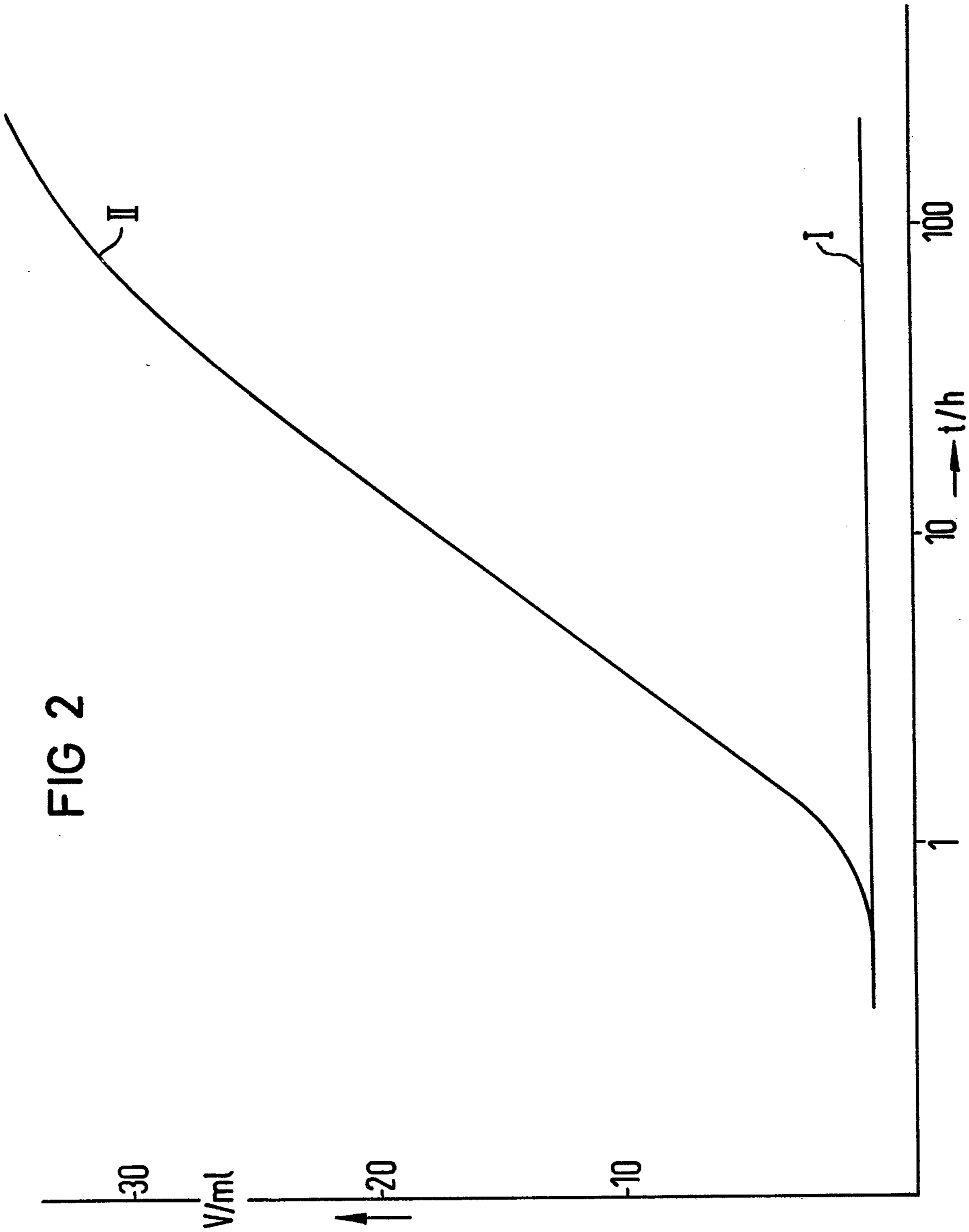

Europäisches Patentamt

# EUROPÄISCHER RECHERCHENBERICHT

0046219
Nummer der Anmeldung
EP 81 10 5950

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | FR - A - 1 070 934 (WESTERN ELECTRIC CO. INC.)<br>* Seite 2, Spalte 1, Absatz 3; Seite 1, Spalte 2, Absatz 5; Seite 3; Zusammenfassung 1°-7° *<br>& DE - C - 977 159<br>-- | 1-3 | H 01 G 9/02 |
| | DE - B - 1 025 993 (STANDARD ELEKTRIK A.G.)<br>* Spalte 1, Zeilen 42-49; Spalte 2, Zeilen 40-48; Spalte 3, Zeilen 30-35 *<br>-- | 1 | RECHERCHIERTE SACHGEBIETE (Int. Cl.³)<br>H 01 G 9/02 |
| | ELECTROCHEMICAL TECHNOLOGY, Band 6, Nr. 5,6, Mai/Juni 1968, Seiten 189-192 Princeton, U.S.A. F.J. BURGER et al.: "Capacitor electrolytes for cathode depolarization"<br>* Seite 189, Spalte 1; Seite 190, "Results" *<br>-- | 1,3 | |
| | DE - A - 2 816 033 (SANYO ELECTRIC CO)<br>* Seite 4, Absatz 2 *<br>-- | 1 | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| D | DE - B - 2 641 939 (SIEMENS A.G.)<br>* Anspruch *<br>-- | 4,5 | |
| A | DE - A - 2 160 930 (KONDENSATORFABRIKEN WICON AIS)<br>---- | | |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Den Haag | 23-11-1981 | SCHUERMANS |

EPA form 1503.1 06.78